# EUROPÄISCHE PATENTANMELDUNG

(11) **EP 2 324 740 A1**
(43) Veröffentlichungstag der Anmeldung: **25.05.2011**
(21) Anmeldenummer: 10014934.3
(22) Anmeldetag: 24.11.2010
(51) Int. Cl.: A47J 37/07

(54) **Grillvorrichtung**

(30) Priorität: 24.11.2009 DE 102009054197
(71) Anmelder: Dario Markenartikelvertrieb GmbH & Co. KG, 20095 Hamburg (DE)
(72) Erfinder: Peters, Björn, 22609 Hamburg (DE)
(74) Vertreter: Sasse, Stefan

(57) **Zusammenfassung**

Erfindungsgemäß ist eine Grillvorrichtung mit einem Kohlebecken, gekennzeichnet durch eine aus dem Kohlebecken (4) nach oben ausfahrbare und wieder in das Kohlebecken (4) einfahrbare Wandung (10).

## Beschreibung

Die vorliegende Erfindung betrifft eine Grillvorrichtung mit einem Kohlebecken.

Vorrichtungen zum Grillen insbesondere von Fleisch, Fisch und Gemüse sind vielfältig bekannt. Neben technischen Weiterentwicklungen, bei denen die Hitze durch Gasflammen oder elektrische Heizelemente erzeugt wird, gibt es weithin verbreitet vielfältige Grillvorrichtungen, in denen Holzkohle zum Glühen gebracht wird. Die glühende Kohle liegt dabei in der Regel in einem Kohlebecken. Die Grillvorrichtung weist dann üblicherweise einen Grillrost und/oder zum Beispiel einen Spieß auf, mit deren Hilfe das Grillgut über der Glut in dem Kohlebecken gehalten wird.

Um die Glut zu entfachen, sind mannigfaltige Verfahren und Hilfsmittel bekannt geworden. Zum Beispiel Anbrennhilfen gibt es als Feststoff, blockweise oder als Flüssigkeit: zum Beispiel Anzündflüssigkeit wird einfach über die kalte Holzkohle gegossen und angezündet, oder Stücke eines leicht brennbaren Materials werden zwischen die Kohle gesteckt und entfacht. Um Letzteres wirkungsvoll auszuführen, wird üblicherweise versucht, die Kohle über den Anzündhilfe-Stücken aufzuhäufen, damit deren Hitze beim Anbrennen aufsteigend so intensiv wie möglich auf die Kohle einwirkt. Dies erfordert eine gewisse Geschicklichkeit und ist bisweilen mühsam.

Der vorliegenden Erfindung liegt die Aufgabe zugrunde, eine Grillvorrichtung mit einem Kohlebecken zu schaffen, bei der das Entfachen der Kohlcglut vereinfacht ist.

Diese Aufgabe wird erfindungsgemäß von einer Grillvorrichtung mit den Merkmalen des Anspruchs 1 gelöst. Bevorzugte Ausgestaltungen sind in den Unteransprüchen angegeben.

Die erfindungsgemäße Grillvorrichtung hat ein Kohlebecken (Kohleschüssel oder Feuerschüssel). Erfindungsgemäß weist die Grillvorrichtung eine Wandung auf, die sich aus dem Kohlebecken nach oben ausfahren und zum Beispiel nach ihrer Verwendung in das Kohlebecken wieder einfahren lässt. Die ausgefahrene Wandung kann als aus dem Kohlebecken empor stehendes Element dazu dienen, die Kohle dagegen angehäuft seitlich abzustützen. Folglich ist es bevorzugt, dass die Wandung einen ring- oder ringsegmentförmigen Horizontalquerschnitt hat. Bei ringförmigem Horizontalquerschnitt ergibt sich also als verfahrbare Wandung ein Rohr. Dies kann einen kreisringförmigen Horizontalquerschnitt haben, so dass die Wandung dann zylinderrohrförmig ist. Aber beliebige andere Formen sind ebenfalls möglich. Zum Beispiel wenn der erfindungsgemäße Grill als sogenannter "Säulengrill" ausgebildet ist, ist es besonders bevorzugt, dass die Wandung einen rechteckigen oder quadratischen, ring- oder ringsegmentförmigen Horizontalquerschnitt hat, der dem der Säule entspricht: Wenn bei einem Säulengrill das Kohlebecken zum Beispiel auf einer Säule aus rohrförmig gebogenem Blech mit rechteckigem ringförmigen Horizontalquerschnitt steht, lässt sich die erfindungsgemäße Wandung in dieser Säule konstruktiv besonders gut unterbringen, wenn sie einen rind- oder ringsegmentförmigen Horizontalquerschnitt ebenfalls rechteckiger Gestalt hat mit Ausmaßen, die diese Wandung als Teleskopelement in der Säulc führt.

Insbesondere wenn die erfindungsgemäße Wandung einen ringförmigen Horizontalquerschnitt hat (oder wenn bei ringsegmentförmigem Horizontalquerschnitt nur wenig für eine vollständig geschlossene Ringform fehlt), ist die Bedienung der erfindungsgemäßen Grillvorrichtung im Wesentlichen folgende: An dem kalten Grill wird die erfindungsgemäße Wandung aus dem Kohlebecken nach oben ausgefahren. In den Bereich des Kohlebeckens, der von der ausgefahrenen Wandung umgeben ist, wird die kalte Kohle hineingeschüttet. Mittels einer Anbrennhilfe wird die so räumlich von der erfindungsgemäßen Wandung zusammengehaltene Kohle angezündet. Durch die seitliche Wandung wird dabei zum einen die Hitze der Anbrennhilfe und der sich entfachenden Kohle räumlich konzentriert und an seitlicher Abstrahlung gehindert. Zum anderen hält die erfindungsgemäße Wandung die Kohle räumlich beieinander, so dass dieser Effekt begünstigt wird.

Damit dieser beschriebene Effekt zu einem Kamineffekt weitergebildet wird, weist das Kohlebecken in einem von der Wandung umgrenzten oder an die Wandung angrenzenden Bereich die Mündung einer Luftzuführung auf, die unterhalb des Kohlebeckens angeordnet ist. Im einfachsten Fall ist dies mindestens eine Öffnung, die von unten für Umgebungsluft irgendwie zugänglich in das Kohlebecken hineinführt. Um insbesondere zu verhindern, dass Kohlestaub und -stückchen dort hindurch nach unten fallen, kann die Mündung durch ein Sieb oder Rost überdeckt sein. Zum Beispiel bei der Ausbildung als Säulengrill ist die Mündung bevorzugt in dem Bereich des Kohlebeckens, wo sich darunter der Innenraum einer rohrförmigen Säule befindet. Insbesondere in dieser Ausgestaltung kann sich unterhalb der Mündung (dann in die Säule integriert) eine Schublade befinden, in die Kohlestaub und - stückchen (sowie beim und nach dem Brennen auch Asche) hineinfallen können und sich einfach entsorgen lassen. In der Ausgestaltung als Säulengrill ist es dann ferner möglich, die Luftzufuhr dadurch zu dosieren, dass die unterhalb des Kohlebeckens an die Mündung angrenzende Säulc geschlossen rohrförmig ausgebildet ist, mindestens bis zu einer Belüftungsöffnung, deren Öffnungsgröße sich zum Beispiel durch einen Schieber oder eine Drehkulisse einstellen lässt. Dies macht die Stärke des Luftstroms durch die Mündung steuerbar, der aufgrund des Kamineffekts beim Anbrennen der Kohle in der erfindungsgemäßen Wandung entsteht. Auch kann übrigens die Ascheschublade selbst (durch Auf- und Zuschieben) als luftregulierendes Element eingesetzt werden.

Zusätzlich zu oder unabhängig von den soweit beschriebenen bevorzugten Ausgestaltungen der Erfindung kann unter der Mündung ein Zündmittelsockel angeordnet sein. Dieser ist eine passend geformte Vorrichtung, auf oder in die sich ein Anbrennmittel (z.B. Anzündwürfel oder auch bloß geknülltes Zeitungspapier in ausreichender Menge) legen, stellen oder gießen lässt. Besonders bevorzugt ist hierbei, diesen in einem insbesondere seitlich zugänglichen Fach auszubilden, welches sich öffnet, wenn die Wandung nach oben ausgefahren ist. Wiederum in bevorzugter Ausgestaltung als Säulengrill kann dieses Fach durch ein seitliches Fenster in der Säule unmittelbar unterhalb des Kohlebeckens zugänglich sein, welches den darin angeordneten Zündmittelsockel zugänglich macht. Um die Funktion der oben beschriebenen Schublade zu ermöglichen, ist der Sockel vorzugsweise entweder durchlöchert ausgebildet, also selbst nach Art eines möglichst grobmaschigen Siebes oder Rosts, oder er hat eine so kleine Fläche, dass Kohle und Asche daran vorbei fallen können. Um die oben beschriebene steuerbare Luftzufuhr in diesem Zusammenhang zu ermöglichen, kann zum Beispiel entweder die seitliche Öffnung verschließbar sein oder (zum Beispiel wie gesagt mittels Schieber oder Drehkulisse) selbst die Einstellvorrichtung bilden.

Mit diesen soweit beschriebenen bevorzugten Elementen der erfindungsgemäßen Vorrichtung ermöglicht sich ein schnelles Anbrennen von Kohle dadurch, dass die ausfahrbare Wandung eine Art Schlot oder Kamin bildet, in dem die (später glühende, durch wieder Einfahren der Wandung dann im Kohlebecken zum Abgeben der Wärme möglichst großflächig als Schicht mit einer Schichtdicke zwischen 2 cm und 8 cm ausgebreitete) Kohle zu einer kompakten Packung zusammengehalten ist, deren horizontale Querschnittsfläche in dem (insbesondere ring- oder ringsegmentförmigen) Horizontalquerschnitt der Wandung einen Durchmesser (als zumindest ungefähr kreisförmige oder ovale Ringform) oder eine Kantenlänge (als zumindest ungefähr rechteckige oder quadratische Ringform) aufweist, die kleiner ist als oder gleich ist wie die mögliche Füllhöhe in der erfindungsgemäßen Wandung. Zum Beispiel beträgt ein Durchmesser oder eine Kantenlänge des ring- oder ringsegmentförmigen Horizontalquerschnitts 10 cm bis 20 cm und die aus dem Kohlebecken ausfahrbare Höhe der Wandung 12 cm bis 40 cm. Dabei beträgt die Höhe vorzugsweise 100% bis 150% eines Durchmessers oder einer Kantenlänge.

Die so vorzugsweise ausgebildete Wandung hält also die zunächst kalte Kohle als dichte Packung in der schlotförmigen Wandung zusammen. Auf dem Zündmittelsockel darunter lässt sich dann eine Anbrennhilfe anordnen und entfachen. Deren Hitze steigt durch die Mündung in den Innenraum der Wandung. Durch die Hitze entsteht ein Luftzug durch die schlotförmige Wandung nach oben (Kamineffekt). Dies alles begünstigt insgesamt den erfindungsgemäßen Effekt der aus dem Kohlebecken nach oben ausfahrbaren Wandung.

Die Wandung ist erfindungsgemäß auch wieder in das Kohlebecken einfahrbar, damit dann, wenn die Kohle glüht, die Wandung aus dem Kohlebecken "verschwindet" und die glühende Kohle gleichmäßig in dem Kohlebecken ausgebreitet werden kann, um das Grillgut darüber zu erhitzen.

Die erfindungsgemäße Grillvorrichtung wird im. Folgenden mit Bezug auf die beigefügten Abbildungen von Ausfdhrungsbeispielen beschrieben.
- **Figur 1**: ist eine räumliche Darstellung eines erfindungsgemäßen Säulengrills mit in das Kohlebecken eingefahrener Wandung,
- **Figur 2**: ist eine räumliche Ansicht des erfindungsgemäßen Säulengrills nach (Figur 1 mit ausgefahrener Wandung, in die Kohle hineingeschüttet wird,
- **Figur 3**: ist eine räumliche Vorderansicht eines Ausschnitts des Säulengrills nach Figur 1 und 2 und
- **Figur4**: ist eine räumliche Vorderansicht des Säulengrills nach Figur 1 bis 3 mit cingefahrener Wandung und glühender Kohle.

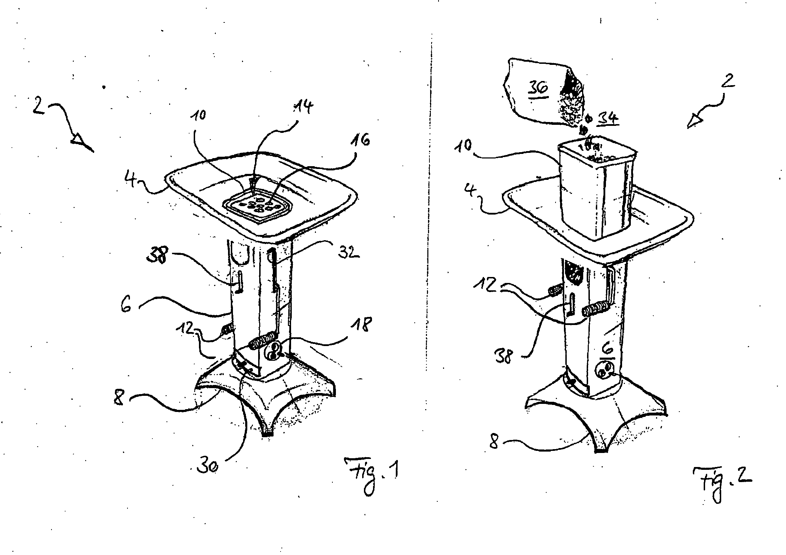

In Figur 1 ist ein Säulengrill 2 erkennbar, bei dem ein Kohlebecken 4 oberseitig auf einer Säule 6 ruht, welche wiederum auf einem Standfuß 8 steht. Die gleiche Ansicht des Säulengrills 2 in Figur 2 zeigt, dass aus dem Kohlenbecken 4 eine Wandung 10 (ausfahrbar ist und) ausgefahren wurde. Die Wandung 10 ist rohrförmig mit ringförmigem, nämlich rechteckigem Horizontalquerschnitt, der abgerundete Ecken aufweist. Die in senkrechter Richtung verfahrbare Wandung lässt sich mittels zweier Handgriffe 12 (auch ein einzelner Handgriff in einem frontseitigen Schlitz unterhalb der weiter unten beschriebenen Zündmittelöffnung 20 ist alternativ denkbar; nicht dargestellt) aus der Säule 6 aufwärts und so aus dem Kohlenbecken 4 nach oben sowie abwärts und so in die Säule 6 wieder hinein schieben, so dass dann die Anordnung gemäß Figur 1 entsteht. Hier ist im Kohlebecken 4 nur der obere Rand der Wandung 10 erkennbar. Alternativ oder ergänzend zu der Betätigung mittels Handgriff ist auch eine Pedalbetätigung (nicht dargestellt) möglich.

In dem von der Wandung 10 umgrcnztcn Bcreich 14 des Kohlebeckens 4 sind in Figur 1 neun kreisrunde Mündungen 16 einer Luftzuführung 6 erkennbar, welche im Innenraum der rohrförmigen Säule 6 verläuft. Die Luftzuführung 6 endet am unteren Ende der Säule 6 in einer Luftzufuhröffnung 18, die mittels einer Drehkulisse in ihrer Öffnungsgröße einstellbar und ganz verschließbar ist.

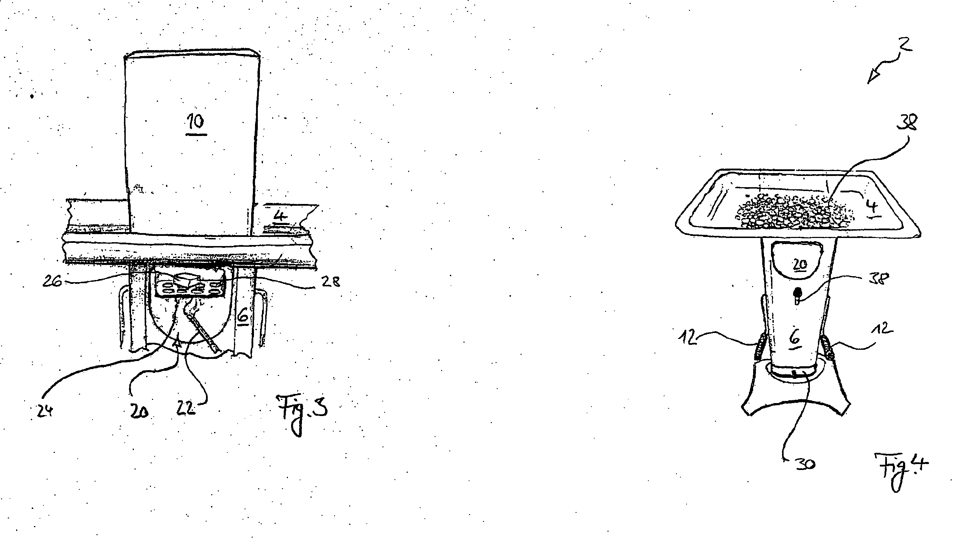

An der Vorderseite der Säule 6 unterhalb des Kohlebeckens 4 ist in Figur 1 und 2 eine Zündmittelöffnung 20 erkennbar. Mit Blick auf Figur 3 ist diese in Vorderansicht dargestellt. Es lässt sich in Figur 3 erkennen, dass die ausgefahrene Wandung 10 die Zündmittelöffnung 20 freigibt, so dass zum Beispiel mittels eines Streichholzes 22, welches unter einen Zündmittelsockel 24 gehalten wird, das darauf befindliche Zündmittel 26 angezündet werden kann. Der Zündmittelsockel 24 besteht im Wesentlichen aus einem horizontalen mit großen kreisförmigen Bohrungen 28 versehenen Blech, auf dem das Zündmittel 26 liegen kann. Durch die kreisförmigen Öffnungen 16 (Figur 1) in dem von der Wandung 10 umgrenzten Bereich des Kohlebeckens 4 sowie durch die kreisförmigen Bohrungen 28 im Zündmittelsockel 24 können Kohlestücke und -staub sowie Asche nach unten durch die Säule 6 fallen in eine Schublade 30 hinein, von wo aus sie einfach zu entsorgen sind.

### Folgendes ist nicht dargestellt:

Der Zündmittelsockel 24 kann fest mit der Säule 6 oder dem Kohlebecken 4 zum Beispiel durch Stege (die jeweils durch einen Vertikalschlitz in der Wandung 10 hindurchgehen) verbunden sein, oder auch durch einen Mittelsteg wippenartig kippbar sein, um nach Nutzung des Grillgerätes ein leichtes Einfegen der Asche in die Säule 6 zu ermöglichen. Ferner kann der Zündmittelsockel 24 als Zündmittelkammer (Zündmitteldeckel, Zündmittelwand und Zündmittelsockel) ausgebildet und herausnehmbar gestaltet sein, um bei der Reinigung des Kohlebeckens buchstäblich nicht im Wege (nämlich der dabei durch die Säule 6 herabfallenden Asche, Kohle und Dreckstücke) zu sein.

Die Handhabung der erfindungsgemäßen Grillvorrichtung lässt sich durch die Folge der Figuren 1 bis 4 anschaulich erklären: aus dem kalten Säulengrill in Figur 1 wird mittels der Handgriffe 12 die rohrförmige Wandung 10 aus dem Kohlebecken 4 nach oben geschoben und mittels einer formschlüssigen Arretierung 32 arretiert. Kohle 34 wird aus einem Kohlesack 36 bis zu einer Füllhöhe kurz unter den oberen Rand der Wandung 10 in die schlotförmige Wandung 10 hineingeschüttet. Unterseitig kommen die Kohlestücke 34 dabei auf den Mündungen 16 zu liegen. Dadurch, dass die Wandung 10 nach oben geschoben war, hatte sich die Zündmittelöffnung 20 gemäß Figur 3 geöffnet. Dorthinein wird Zündmittel 26 auf den Zündmittelsockel 24 gelegt und angezündet. Dann wird die Zündmittelöffnung 20 mittels eines Schiebers 38, der von unten nach oben vor die Zündmittelöffnung 20 geschoben wird, verschlossen. Nun lässt sich der Luftzug, der durch den Kamineffekt aufgrund der Hitze des brennenden Zündmittels 26 und der zu Glühen beginnenden Kohle 34 entsteht, unten am unteren Ende der Säule 6 mittels der Kulisse 18 einstellen. In dieser Phase dürfte es sinnvoll sein, die Belüftungsöffnung 18 möglichst groß einzustellen, um durch viel Sauerstoff die Verbrennung zu begünstigen. Auf diese Weise durch den Kamineffekt unterstützt, glüht die Kohle sehr schnell durch. Dies ist durch Blick von oben in die oberseitige Öffnung der Wandung 10 erkennbar. Sobald die Kohle durchgeglüht ist, wird mittels der Handgriffe 12 die Wandung 10 zurück in die Säule 6 hineingeschoben, so dass sie in dem Kohlebecken 10 nicht mehr emporragt (Figur 4). Dadurch fällt die glühende Kohle 38 auseinander und verteilt sich durchgeglüht im Kohlebecken 4 ― und kann mittels geeigneter Handwerkzeuge (nicht dargestellt) auch noch weiter gleichmäßig (oder auch bewusst ungleichmäßig) verteilt werden.

## Patentansprüche

1. Grillvorrichtung mit einem Kohlebecken, **gekennzeichnet durch** eine aus dem Kohlebecken (4) nach oben ausfahrbare und wieder in das Kohlebecken (4) einfahrbare Wandung (10).

2. Grillvorrichtung nach dem vorhergehenden Anspruch, **dadurch gekennzeichnet, dass** die Wandung (10) einen ring- oder ringsegmentförmigen Horizontalquerschnitt hat.

3. Grillvorrichtung nach einem der vorhergehenden Ansprüche, **dadurch gekennzeichnet, dass** die Wandung (10) mittels eines Pedals und/oder Handgriffs (12) geführt aus- und einfahrbar ist.

4. Grillvorrichtung nach einem der vorhergehenden Ansprüche, **dadurch gekennzeichnet, dass** die Wandung (10) dadurch aus dem Kohlebecken (4) ausfahrbar ist, dass das Kohlebecken bezüglich der Wandung (10) absenkbar ist.

5. Grillvorrichtung nach einem der vorhergehenden Ansprüche, **dadurch gekennzeichnet, dass** die Wandung (10) in der ausgefahrenen Position arretierbar ist.

6. Grillvorrichtung nach einem der vorhergehenden Ansprüche, **dadurch gekennzeichnet, dass** das Kohlebecken (4) in einem von der Wandung (10) umgrenzten Bereich die Mündung (16) einer Luftzuführung (6), die unterhalb des Kohlebeckens (4) angeordnet ist, aufweist.

7. Grillvorrichtung nach dem vorhergehenden Anspruch, **dadurch gekennzeichnet, dass** unter der Mündung (16) ein Zündmittelsockel (24) angeordnet ist.
